# FASCICULE DE BREVET EUROPEEN

(11) **EP 1 894 818 B1**
(45) Date de publication et mention de la délivrance du brevet: **04.05.2011**
(21) Numéro de dépôt: 07301289.0
(22) Date de dépôt: 01.08.2007
(51) Int. Cl.: B62D 17/00

(54) **Essieu pour véhicule et cale de réglage du parallélisme d'un tel essieu**
Fahrzeugachse und Abstandsstück zur Regulierung der Parallelität einer solchen Achse
Axle for vehicle and shim for adjusting the alignment of such an axle

(30) Priorité: 29.08.2006 FR 0653498
(43) Date de publication de la demande: 05.03.2008
(73) Titulaire: Renault s.a.s., 92100 Boulogne Billancourt (FR)
(72) Inventeur: Rollet, Remi, 91190 Gif Sur Yvette (FR)

(56) Documents cités:
- JP-A- 2002 274 134
- US-A- 5 110 151
- US-A1- 2005 035 567
- LARRY CARLEY: "Using Shims to Correct Wheel Alignment" ARTICLE INTERNET, [Online] XP002420883 Extrait de l'Internet: URL:http://www.babcox.com/editorial/bf/bf2 0044.htm> [extrait le 2007-02-16]

## Description

L'invention concerne un essieu pour véhicule et une cale de réglage du parallélisme d'un tel essieu.

L'invention concerne plus particulièrement un essieu pour véhicule, du type comportant deux bras qui s'étendent globalement longitudinalement et qui sont reliés transversalement par une traverse, dans lequel chaque bras comporte une première extrémité avant qui est reliée à un élément structurel du véhicule, tel que le châssis, par l'intermédiaire de moyens d'articulation aptes à se déformer élastiquement et une deuxième extrémité arrière pourvue d'un support d'une fusée pour une roue du véhicule, dans lequel le support comporte une plaque de fixation qui s'étend verticalement selon la direction longitudinale.

On connaît de nombreux essieux pour véhicule de ce type, en particulier des essieux dits "souples" ou "semi-rigides", qui sont par exemple destinés à être montés à l'arrière d'un véhicule automobile.

Après la fabrication d'un tel essieu, on procède à des opérations de contrôle du parallélisme, encore appelé parfois pincement, de l'essieu afin de déterminer tout défaut éventuel de parallélisme qui se traduit par des dispersions angulaires entre les supports de fusée, respectivement droit et gauche, de l'essieu.

Lorsque l'essieu présente de telles dispersions angulaires, on procède généralement pour le corriger à un usinage approprié de la plaque de fixation du support de fusée.

Les dispersions angulaires peuvent parfois atteindre des valeurs de l'ordre de 10' à 20', voir plus si l'essieu est utilisé à des altitudes différentes selon les véhicules à produire.

D'une manière générale, il est donc souhaitable de pouvoir procéder à un réglage du parallélisme d'un essieu permettant soit de s'affranchir de l'usinage, soit d'effectuer des corrections sélectives selon le cas d'usage.

Les notions de "pincement" et "d'ouverture" sont utilisées pour définir l'orientation du parallélisme et correspondent respectivement, dans le premier cas, à une convergence des plans médians des roues vers l'avant et, dans le second cas, à une convergence des plans médians des roues vers l'arrière du véhicule.

De manière connue, la valeur du parallélisme peut être définie en utilisant soit un angle (formé par les deux plans médians des roues) généralement exprimé en minute ('), soit par un écart de distance.

Lorsque l'essieu présente des dispersions angulaires, il est également connu, par exemple du document JP 2002-274134, d'utiliser des cales pour en corriger les défauts de parallélisme.

Ce document représente des cales de forme globalement parallélépipédique qui, destinées à être notamment interposées entre une plaque de fixation et une fusée, comporte également quatre trous pour le passage des organes de fixation de la fusée.

On connaît encore de l'état de la technique l'utilisation de demi-cale ou « half-shim » pour corriger notamment des défauts de parallélisme d'un essieu.

Ainsi, la plaque de fixation du support comporte, sur sa face latérale externe, une première zone de correction comportant deux trous de fixation et une deuxième zone de correction comportant deux autres trous de fixation.

Toutefois, il n'est pas aisé de maintenir de telles demi-cales en position lors de leur mise en place, notamment en raison de leur dimension réduite.

L'invention vise donc à remédier à ces inconvénients en proposant notamment une solution permettant de maintenir la ou les cales et ainsi de procéder au réglage du parallélisme d'un essieu de manière particulièrement simple, économique, et efficace.

Dans ce but, l'invention propose un essieu pour véhicule du type décrit précédemment, caractérisé en ce qu'il comporte une cale de réglage qui, apte à être positionnée sélectivement dans l'une ou l'autre desdites zones de correction, comporte des moyens pour son accrochage sur la plaque de fixation.

L'essieu comporte au moins une cale de réglage qui est interposée transversalement entre la plaque de fixation sur laquelle elle est accrochée et la fusée associée de manière à pouvoir régler sélectivement le parallélisme de l'essieu au moyen de ladite cale dont l'épaisseur d'une part et la position longitudinale sur l'arrière ou l'avant de la face latérale externe de la plaque de fixation d'autre part, sont respectivement déterminées pour corriger une dispersion angulaire donnée par une augmentation ou une diminution du pincement.

Grâce à l'invention, la cale est susceptible d'être préalablement montée sur la plaque de fixation du support de manière imperdable et cela indépendamment des autres pièces, telles que la fusée.

De plus, il est possible de procéder à un réglage du parallélisme de l'essieu après sa fabrication pendant tout le cycle de vie du véhicule.

De préférence, l'essieu est ici du type dans lequel la plaque de fixation comporte au moins quatre trous pour le passage d'organes de fixation de la fusée, qui sont agencés en rectangle de manière à être respectivement sensiblement alignés deux à deux selon la direction longitudinale et selon la direction verticale.

Selon d'autres caractéristiques de l'invention :
- la cale de réglage présente une forme générale de "lunettes" comportant une partie supérieure et une partie inférieure qui comporte chacune un orifice, respectivement supérieur et inférieur, pour le passage des organes de fixation et qui sont reliées entre elles par une partie centrale de liaison ;
- la cale de réglage comporte des moyens de positionnement de la cale sur la plaque de fixation ;
- les moyens de positionnement de la cale sont agencés autour de l'un au moins de ses orifices et s'étendent transversalement vers l'intérieur de manière à pénétrer dans un des trous associé de la plaque de fixation ;
- les moyens d'accrochage de la cale de réglage comportent au moins une patte supérieure en forme de "L" ou de "U" apte à coopérer avec une portion du bord longitudinal supérieur et/ou avec l'une des faces de la plaque de fixation ;
- la cale de réglage présente une épaisseur calibrée comprise entre 0,1 mm et 0,5 mm et la cale de réglage est en inox.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente un exemple d'essieu souple pour véhicule automobile dont le parallélisme a été corrigé au moyen d'une cale de réglage selon l'invention ;
- la figure 2 est une vue en perspective de détail qui représente en éclaté l'extrémité arrière d'un des bras de l'essieu comportant le support de fusée sur la face verticale externe duquel est destiné à être montée la cale de réglage selon l'invention et la fusée de la roue ;
- la figure 3 est une vue partielle en coupe verticale, selon un plan d'orientation transversal, de la plaque du support de fixation de la fusée selon la figure 2.

Dans la description et les revendications, on adoptera à titre non limitatif, les termes "avant" et "arrière", "supérieur" et "inférieur" etc. qui sont utilisés en référence aux figures pour en faciliter la compréhension ainsi que les orientations longitudinale, verticale et transversale selon le repère L, V, T indiqué aux figures.

Dans la description qui va suivre, des éléments identiques, similaires ou analogues seront désignés par les mêmes chiffres de référence.

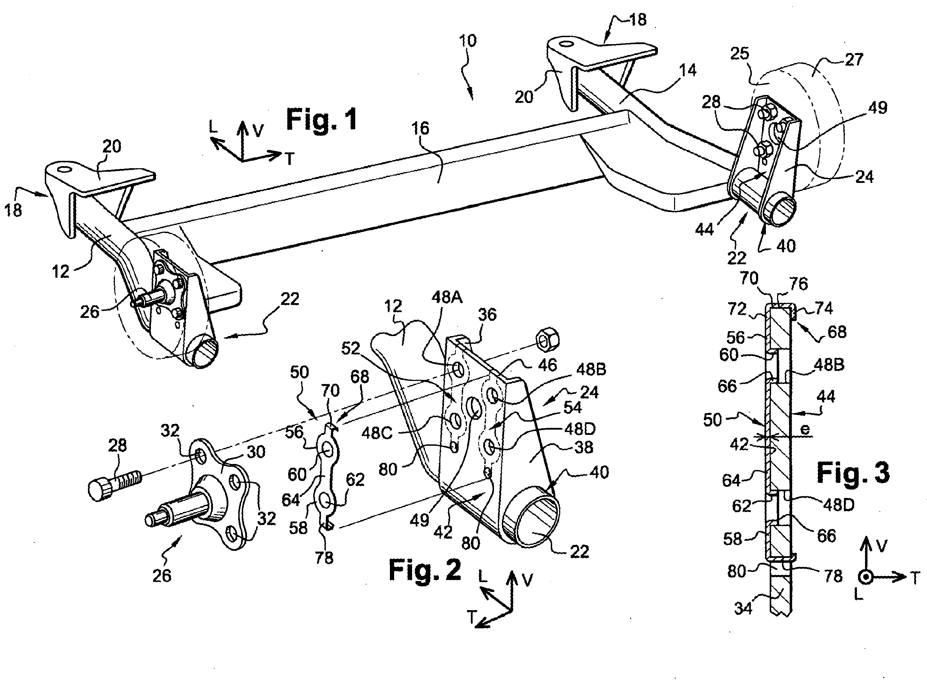

Sur la figure 1, on a représenté un essieu 10 pour véhicule, tel qu'un essieu souple ou semi-rigide pour véhicule automobile, qui est ici plus particulièrement destiné à être monté à l'arrière du véhicule.

L'essieu 10 comporte ici deux bras 12, 14, respectivement un bras gauche 12 et un bras droit 14 sur la figure 1, qui s'étendent globalement longitudinalement et qui sont reliés transversalement par une traverse 16.

Chaque bras longitudinal 12, 14 comporte, d'une part, une première extrémité avant 18 qui est reliée à un élément structurel du véhicule (non représenté), généralement le châssis ou la caisse, par l'intermédiaire de moyens d'articulation 20 qui sont aptes à se déformer élastiquement.

Chaque bras longitudinal 12, 14 comporte, d'autre part, une deuxième extrémité arrière 22 qui est pourvue d'un support 24 destiné à porter une fusée 26 sur laquelle est montée l'une des roues du véhicule (non représentée).

La fusée 26 est montée solidaire du support par l'intermédiaire de moyens de fixation 28, ici des organes de fixation du type vis ou boulons.

On a représenté à la figure 1 les organes de fixation 28 sur les supports 24 après fixation de la fusée 26 et en détail l'un des organes de fixation 28 sur l'éclaté de la figure 2.

De manière connue, les roues montées sur l'essieu arrière 10 sont susceptibles d'être chacune équipées d'un frein représenté schématiquement en trait mixte à la figure 1.

Le frein est par exemple un frein à tambour qui comporte principalement un plateau de frein 25 portant les organes de freinage (segments, etc.) et un tambour de frein 27 qui, intégrant de préférence un moyeu, est solidaire en rotation de la roue du véhicule (non représentée).

Le plateau de frein 25 est généralement interposé transversalement entre le support 24 et la fusée 26 de sorte que sa fixation sur le support 24 est réalisée par l'intermédiaire des organes de fixation 28 de la fusée 26.

La fusée 26 comporte pour sa fixation sur le support 24 une embase 30 qui s'étend globalement verticalement dans un plan orthogonal à l'axe transversal principal de la fusée.

Le plateau de frein 25 et l'embase 30 de la fusée comportent respectivement des trous pour le passage des organes de fixation 28 qui sont ici respectivement au nombre de quatre.

L'embase 30 comporte ainsi pour la fixation de la fusée quatre trous 32 qui sont répartis en rectangle de manière à être sensiblement alignés deux à deux selon les directions longitudinale et verticale.

Le support 24 présente, en coupe par un plan horizontal, une forme de « U » couché. Le support 24 comporte principalement une plaque de fixation 34 qui, formant la barre inférieure du « U », s'étend verticalement selon la direction longitudinale et deux ailes respectivement avant 36 et arrière 38 qui, formant les barres verticales parallèles du « U », sont orthogonales à la plaque 34.

Les ailes 36, 38, présentent globalement une forme triangulaire et comportent, dans leur partie inférieure la plus large, un orifice 40 de forme et de dimensions complémentaires de celles des bras longitudinaux 12, 14, ici de section circulaire, de manière à permettre le montage du support 24 sur l'extrémité arrière 22 du bras.

La plaque verticale de fixation 34 comporte une face latérale externe 42, une face latérale interne 44 et un bord longitudinal supérieur 46.

De préférence, la plaque de fixation 34 comporte au moins quatre trous 48 pour le passage des organes de fixation 28 de la fusée 26, qui sont agencés sensiblement en rectangle de manière à être respectivement alignés deux à deux selon la direction longitudinale et selon la direction verticale.

La plaque 34 comporte ainsi un trou supérieur avant 48A, un trou supérieur arrière 48B, un trou inférieur avant 48C et un trou inférieur arrière 48D.

La plaque 34 comporte centralement, entre les quatre trous 48, un orifice de passage 49.

L'essieu 10 comporte au moins une cale de réglage 50 qui est interposée transversalement entre la plaque de fixation 34 et la fusée 26 associée, avec ici interposition du plateau de frein 25.

Il est possible de régler sélectivement le parallélisme de l'essieu au moyen de la cale 50 dont l'épaisseur « e » d'une part et la position longitudinale sur l'arrière ou l'avant de la face latérale externe 42 de la plaque de fixation 34 d'autre part, sont respectivement déterminées pour corriger une dispersion angulaire donnée par une augmentation ou une diminution du pincement.

La plaque de fixation 34 comporte, sur sa face latérale externe 42, une première zone avant de correction 52 qui est adjacente au trou supérieur avant 48A et au trou inférieur avant 48C de fixation, et une deuxième zone arrière de correction 54 qui est adjacente au trou supérieur arrière 48B et au trou inférieur arrière 48D de fixation.

Les zones de correction avant 52 et arrière 54 sont représentées en pointillés sur la figure 2.

La cale de réglage 50 est apte à être positionnée sélectivement dans l'une ou l'autre desdites zones de correction 52, 54 selon que la correction requise de la dispersion angulaire nécessite une augmentation ou une diminution du pincement.

Selon un exemple de réalisation préféré qui est représenté aux figures 2 et 3, la cale de réglage 50 présente une forme générale de "lunettes" ou plus précisément d'une monture de lunettes.

La cale de réglage 50 comporte une partie supérieure 56 et une partie inférieure 58 qui comporte chacune un orifice, respectivement un orifice supérieur 60 et un orifice inférieur 62, pour le passage traversant des organes de fixation 28 de la fusée 26 sur la plaque 34.

Les parties supérieure 56 et inférieure 58 de la cale 50 sont reliées entre elles par une partie centrale de liaison 64.

On notera qu'une même cale de réglage 50 est susceptible d'être permutée, selon le réglage nécessaire, pour être positionnée sélectivement dans la première zone avant 52 de correction ou dans la deuxième zone arrière 54 de correction.

Avantageusement, pour une épaisseur "e" donnée, la même cale de réglage 50 est susceptible d'être indifféremment utilisée pour augmenter ou diminuer le pincement selon sa position, respectivement longitudinalement à l'avant ou à l'arrière.

De préférence, la cale de réglage 50 comporte des moyens 66 de positionnement de la cale sur la plaque de fixation 34, de manière à positionner la cale 50 par rapport aux trous de fixation 48 selon au moins l'une des directions verticale et longitudinale.

Les moyens de positionnement 66 de la cale sont par exemple constitués par une bague, en variante des pattes, qui est agencée autour de l'un au moins de ses orifices 60, 62.

Avantageusement, les moyens de positionnement 66 sont venus de matière et s'étendent transversalement vers l'intérieur de manière à pénétrer, après montage, dans au moins l'un des trous 48 associé de la plaque de fixation 34.

Avantageusement, la cale de réglage 50 comporte des moyens 68 pour son accrochage sur la plaque 34 du support 24.

Les moyens d'accrochage 68 de la cale de réglage 50 comportent au moins une patte supérieure 70 en forme de "L" ou de "U" apte à pincer la plaque 34 au niveau du bord longitudinal supérieur 46.

La patte supérieure 70, ici en coupe transversale en forme de "U", comporte un premier bras vertical 72, dit extérieur, qui s'étend verticalement vers le haut depuis la partie supérieure 56 de la cale 50, un second bras 74, dit intérieur, qui est lié au premier bras 72 par une partie de liaison 76.

Les bras 72, 74 coopèrent respectivement avec une partie des faces externe 42 et interne 44 de la plaque de fixation 34 adjacente au bord longitudinal supérieur 46 avec lequel la partie 76 est ici en contact.

De préférence, les moyens d'accrochage 68 de la cale de réglage 50 comportent une deuxième patte inférieure 78 qui analogue à la première patte 70, présente globalement une forme de "L" ou de "U".

La deuxième patte inférieure 78 pénètre dans un perçage complémentaire 80 que comporte la partie inférieure de la plaque 34 du support 24.

En variante, les moyens de positionnement 66 s'étendent transversalement à travers les trous 48 sur une longueur supérieure à la moitié de l'épaisseur de la plaque 34 de manière à permettre un accrochage supplémentaire.

La cale 50 est susceptible d'être préalablement montée sur le support 24 de manière imperdable et indépendamment des autres pièces, telles que le plateau de frein 25 ou la fusée 26.

On a déterminé qu'une cale de réglage présentant une épaisseur de l'ordre de 0,2 mm permettait dans certain cas de corriger une dispersion angulaire d'environ 10'.

Avantageusement, la cale de réglage 50 présente une épaisseur "e" calibrée qui est comprise entre 0,1 mm et 0,5 mm de sorte que l'amplitude de réglage soit avantageusement de plus ou moins 20'.

De préférence, la cale de réglage 50 est réalisée en inox.

En variante, la cale de réglage 50 est réalisée dans un autre matériau approprié présentant notamment des caractéristiques de dureté et de résistance qui, sensiblement analogues à celles de l'inox, sont déterminées de manière à éviter respectivement le matage lors du serrage des organes de fixation 28 et la corrosion de la cale.

On décrira maintenant un exemple de procédé de réglage du parallélisme d'un essieu pour véhicule au moyen de telle(s) cale(s).

Avantageusement, le procédé de réglage comporte une étape, dite préliminaire, de contrôle du parallélisme afin de déterminer si au moins l'un des supports 34 de l'essieu 10 présente une dispersion angulaire donnée.

Le procédé de réglage est ainsi susceptible d'être mis en oeuvre si, lors de l'étape préliminaire de contrôle, on détermine que l'essieu 10 comporte une dispersion angulaire dans le parallélisme.

Le procédé de réglage comporte ensuite au moins les étapes consistant successivement à :
(a) mesurer la dispersion angulaire ;
(b) déterminer, en fonction de ladite dispersion angulaire mesurée, l'épaisseur et la position d'au moins une cale de réglage 50 destinée à être interposée transversalement entre la face externe 42 de la plaque de fixation 34 et la fusée 26 ; et à
(c) monter ladite cale 50 d'épaisseur calibrée dans une position longitudinale déterminée, sur la première zone avant 52 de correction ou sur la deuxième zone arrière 54 de correction de la plaque de fixation 34, de manière à corriger respectivement la dispersion angulaire par une diminution ou une augmentation du pincement.

On décrira ci-après les différents cas de correction qui sont susceptibles de se produire.

Le premier cas correspond à une correction du parallélisme de l'essieu 10 nécessitant une augmentation du pincement ou de la pince.

Dans ce premier cas, la cale de réglage 50 est alors montée dans la deuxième zone arrière de correction 54 sur l'un et/ou l'autre des deux supports 24 en fonction de la valeur de la dispersion angulaire à corriger.

Ce premier cas est plus particulièrement représenté aux figures 2 et 3.

Lorsque la correction nécessite par exemple une augmentation de la pince d'une valeur angulaire de 10' (minutes), une cale de réglage 50, d'épaisseur "e" calibrée correspondant à la dispersion angulaire, est alors positionnée sur la deuxième arrière de correction 54 de l'un des supports 24.

De préférence, la cale de réglage 50 est montée sur celui des deux supports 24 de l'essieu 10 qui présente le moins de pincement lors de la mesure initiale de l'étape (a).

Lorsque la correction nécessite par exemple une augmentation de la pince d'une valeur angulaire de 20' (minutes), une première cale de réglage 50 est montée sur la deuxième arrière de correction 54 du support gauche 24 et une seconde cale de réglage 50 est montée sur la deuxième arrière de correction 54 du support droit 24 opposé.

Le second cas correspond inversement à une correction du parallélisme de l'essieu 10 nécessitant une diminution du pincement ou de la pince.

Dans ce second cas, la cale de réglage 50 est alors montée dans la première zone avant de correction 52 sur l'un et/ou l'autre des deux supports 24 en fonction de la valeur de la dispersion angulaire à corriger.

Comme pour le premier cas, lorsque la correction nécessite par exemple une diminution de la pince d'une valeur angulaire de 10' (minutes), une cale de réglage 50 d'épaisseur "e" calibrée correspondant à cette dispersion angulaire est alors positionnée sur la première zone avant de correction 52 d'un des supports 24.

De même, lorsque la correction nécessite par exemple une diminution de la pince d'une valeur angulaire de 20' (minutes), une première cale de réglage 50 est montée sur la première zone avant de correction 52 du support gauche 24 et une seconde cale de réglage 50 est montée, à l'opposé transversalement, sur la première zone avant de correction 52 du support droit 24.

Avantageusement, lorsqu'une cale de réglage 50 a été montée, le procédé de réglage comporte une étape supplémentaire de contrôle, dite finale.

Lors de cette étape finale de contrôle, on procède à une nouvelle mesure pour vérifier que le parallélisme de l'essieu 10 est correct, à défaut on procède alors à un nouveau réglage.

Le procédé de réglage est susceptible d'être mis en oeuvre indifféremment après la fabrication de l'essieu 10 ou lors d'opération de réparation et/ou entretien du véhicule.

Avantageusement, la cale de réglage 50 selon l'invention permet notamment de supprimer l'opération d'usinage réalisée auparavant pour corriger le parallélisme de l'essieu 10.

En variante, la cale de réglage 50 est utilisée en complément d'opérations d'usinage notamment pour améliorer la précision des corrections obtenues et la cale de réglage 50 est montée sur la plaque 34 après le traitement de peinture appliqué à l'essieu 10.

Avantageusement, l'opérateur dispose par exemple d'un jeu complet de cales de réglage 50 selon l'invention comprenant différentes cales d'épaisseur "e" calibrée dont la valeur est de préférence comprise entre 0,1 mm et 0,5 mm, avec un pas de 0,05 ou 0,1 mm entre les cales formant le jeu.

En variante, l'opérateur dispose de cales de réglage, dites intermédiaires, qui dépourvues de moyens d'accrochage et de positionnement, sont susceptibles d'être associées à une autre cale afin d'obtenir précisément l'épaisseur calibrée souhaitée à partir d'un jeu comportant un nombre de cales réduits.

## Revendications

1. Essieu (10) pour véhicule, du type comportant deux bras (12, 14) qui s'étendent globalement longitudinalement et qui sont reliés transversalement par une traverse (16), dans lequel chaque bras (12, 14) comporte une première extrémité avant (18) qui est reliée à un élément structurel du véhicule par l'intermédiaire de moyens d'articulation (20) aptes à se déformer élastiquement et une deuxième extrémité arrière (22) pourvue d'un support (24) d'une fusée (26) pour une roue du véhicule, dans lequel le support (24) comporte une plaque de fixation (34) qui s'étend verticalement selon la direction longitudinale, l'essieu comportant au moins une cale de réglage (50) qui est interposée transversalement entre la plaque de fixation (34) et la fusée (26) associée, dans lequel la plaque de fixation (34) comporte au moins quatre trous (48A, 48B, 48C, 48D) pour le passage d'organes de fixation (28) de la fusée (26), qui sont agencés en rectangle de manière à être respectivement sensiblement alignés deux à deux selon la direction longitudinale et selon la direction verticale, dans lequel la plaque (34) du support (24) comporte, sur sa face latérale externe (42), une première zone avant de correction (52) qui est adjacente au trou supérieur avant (48A) et au trou inférieur avant (48C) de fixation, et une deuxième zone arrière de correction (54) qui est adjacente au trou supérieur arrière (48B) et au trou inférieur arrière (48D) de fixation, **caractérisé en ce que** ladite cale de réglage (50), qui est apte à être positionnée sélectivement dans l'une ou l'autre desdites zones de correction (52, 54), comporte des moyens (68) pour son accrochage sur la plaque de fixation (34).

2. Essieu (10) selon la revendication 1, **caractérisé en ce que** la cale de réglage (50) présente une forme générale de "lunettes" comportant une partie supérieure (56) et une partie inférieure (58) qui comportent chacune un orifice (60, 62), respectivement supérieur et inférieur, pour le passage des organes de fixation (28) et qui sont reliées entre elles par une partie centrale de liaison (64).

3. Essieu (10) selon la revendication 2, **caractérisé en ce que** la cale de réglage (50) comporte des moyens de positionnement (66) de la cale (50) sur la plaque de fixation (34).

4. Essieu (10) selon la revendication 3, **caractérisé en ce que** les moyens de positionnement (66) de la cale sont agencés autour de l'un au moins de ses orifices (60, 62) et s'étendent transversalement vers l'intérieur de manière à pénétrer dans un des trous (48) associé de la plaque de fixation (34).

5. Essieu (10) selon la revendication 4, **caractérisé en ce que** les moyens de positionnement (66) de la cale de réglage (50) s'étendent transversalement à travers les trous (48) sur une longueur supérieure à la moitié de l'épaisseur de la plaque (34) de manière à permettre un accrochage supplémentaire.

6. Essieu (10) selon l'une quelconque des revendications précédentes, **caractérisé en ce que** les moyens d'accrochage (68) de la cale de réglage comportent au moins une patte supérieure (70) en forme de "L" ou de "U" apte à coopérer avec une portion du bord longitudinal supérieur (56) et/ou avec l'une (42, 44) des faces de la plaque de fixation (34).

7. Essieu (10) selon l'une quelconque des revendications précédentes, **caractérisé en ce que** la cale de réglage (50) présente une épaisseur (e) calibrée comprise entre 0,1 mm et 0,5 mm.

8. Essieu (10) selon l'une quelconque des revendications précédentes, **caractérisé en ce que** la cale de réglage (50) est en inox.

## Claims

1. Vehicle axle (10), of the type comprising two arms (12, 14) running longitudinally overall and which are connected transversally by a transverse link (16), in which each arm (12, 14) comprises a first, front, end (18), which is connected to a structural element of the vehicle via means (20) of articulation which are capable of deforming elastically, and a second, rear, end (22) provided with a support (24) for a stub axle (26) for a wheel of the vehicle, in which the support (24) comprises a fixing plate (34) which extends vertically in the longitudinal direction, the axle comprising at least one adjusting shim (50) which is inserted transversally between the fixing plate (34) and the associated stub axle (26), in which the fixing plate (34) comprises at least four holes (48A, 48B, 48C, 48D) through which fasteners (28) for fixing the stub axle (26) pass, these holes being set out in a rectangle so that they are respectively substantially aligned in pairs in the longitudinal direction and in the vertical direction, in which the plate (34) of the support (24) comprises, on its external lateral face (42), a first, front, correction zone (52) which is adjacent to the front upper fixing hole (48A) and to the front lower fixing hole (48C), and a second, rear, correction zone (54) which is adjacent to the rear upper fixing hole (48B) and to the rear lower fixing hole (48D), **characterized in that** the said adjusting shim (50), which can be positioned selectively in one or other of the said correction zones (52, 54), comprises means (68) of attaching it to the fixing plate (34).

2. Axle (10) according to Claim 1, **characterized in that** the adjusting shim (50) is in the overall shape of a pair of spectacles, comprising an upper part (56) and a lower part (58) each of which has a respective upper and lower orifice (60, 62) through which the fasteners (28) can pass and which are joined together by a central connecting part (64).

3. Axle (10) according to Claim 2, **characterized in that** the adjusting shim (50) comprises positioning means (66) for positioning the shim (50) on the fixing plate (34).

4. Axle (10) according to Claim 3, **characterized in that** the means (66) for positioning the shim are arranged around at least one of the orifices (60, 62) thereof and extend transversally inwards so as to enter one of the associated holes (48) in the fixing plate (34).

5. Axle (10) according to Claim 4, **characterized in that** the means (66) for positioning the adjusting shim (50) run transversally through the holes (48) over a length greater than half the thickness of the plate (34) so as to provide additional attachment.

6. Axle (10) according to any one of the preceding claims, **characterized in that** the means (68) of attaching the adjusting shim comprise at least one additional L-shaped or U-shaped tab (70) able to collaborate with a portion of the upper longitudinal edge (56) and/or with one (42, 44) of the faces of the fixing plate (34).

7. Axle (10) according to any one of the preceding claims, **characterized in that** the adjusting shim (50) has a calibrated thickness (e) of between 0.1mm and 0.5mm.

8. Axle (10) according to any one of the preceding claims, **characterized in that** the adjusting shim (50) is made of stainless steel.

## Patentansprüche

1. Achse (10) für ein Fahrzeug von der Art, die zwei Arme (12, 14) aufweist, welche sich insgesamt in Längsrichtung erstrecken und in Querrichtung durch einen Querträger (16) verbunden sind, wobei jeder Arm (12, 14) ein erstes vorderes Ende (18), das mit einem Strukturelement des Fahrzeug über Gelenkeinrichtungen (20) verbunden ist, die sich elastisch verformen können, und ein zweites hinteres Ende (22) aufweist, das mit einem Träger (24) eines Achsschenkels (26) für ein Rad des Fahrzeugs versehen ist, wobei der Träger (24) eine Befestigungsplatte (34) aufweist, die sich senkrecht gemäß der Längsrichtung erstreckt, wobei die Achse mindestens eine Einstellscheibe (50) aufweist, die quer zwischen die Befestigungsplatte (34) und den zugeordneten Achsschenkel (26) eingefügt ist, wobei die Befestigungsplatte (34) mindestens vier Löcher (48A, 48B, 48C, 48D) für den Durchgang von Befestigungselementen (28) des Achsschenkels (26) aufweist, die im Rechteck angeordnet sind, um je im Wesentlichen paarweise in der Längsrichtung bzw. in der senkrechten Richtung fluchtend ausgerichtet zu sein, wobei die Platte (34) des Trägers (24) auf ihrer äußeren Seitenfläche (42) eine erste vordere Korrekturzone (52), die dem vorderen oberen (48A) und dem vorderen unteren Befestigungsloch (48C) benachbart ist, und eine zweite hintere Korrekturzone (54) aufweist, die dem hinteren oberen (48B) und dem hinteren unteren Befestigungsloch (48D) benachbart ist, **dadurch gekennzeichnet, dass** die Einstellscheibe (50), die selektiv in der einen oder der anderen Korrekturzone (52, 54) positioniert werden kann, Einrichtungen (68) für ihr Einhaken auf der Befestigungsplatte (34) aufweist.

2. Achse (10) nach Anspruch 1, **dadurch gekennzeichnet, dass** die Einstellscheibe (50) eine allgemeine Form einer "Brille" hat, die einen oberen Bereich (56) und einen unteren Bereich (58) aufweist, die je eine obere bzw. untere Öffnung (60, 62) für den Durchgang der Befestigungsorgane (28) aufweisen und die durch einen zentralen Verbindungsbereich (64) miteinander verbunden sind.

3. Achse (10) nach Anspruch 2, **dadurch gekennzeichnet, dass** die Einstellscheibe (50) Positioniereinrichtungen (66) der Scheibe (50) auf der Befestigungsplatte (34) aufweist.

4. Achse (10) nach Anspruch 3, **dadurch gekennzeichnet, dass** die Positioniereinrichtungen (66) der Scheibe um mindestens eine ihrer Öffnungen (60, 62) herum angeordnet sind und sich quer nach innen erstrecken, um in eines der zugeordneten Löcher (48) der Befestigungsplatte (34) einzudringen.

5. Achse (10) nach Anspruch 4, **dadurch gekennzeichnet, dass** die Positioniereinrichtungen (66) der Einstellscheibe (50) sich quer durch die Löcher (48) über eine Länge erstrecken, die größer als die Hälfte der Dicke der Platte (34) ist, um ein zusätzliches Einhaken zu erlauben.

6. Achse (10) nach einem der vorhergehenden Ansprüche, **dadurch gekennzeichnet, dass** die Einhakeinrichtungen (68) der Einstellscheibe mindestens eine obere Lasche (70) in Form eines "L" oder "U" aufweisen, die mit einem Abschnitt des oberen Längsrands (56) und/oder mit einer (42, 44) der Seiten der Befestigungsplatte (34) zusammenwirken kann.

7. Achse (10) nach einem der vorhergehenden Ansprüche, **dadurch gekennzeichnet, dass** die Einstellscheibe (50) eine kalibrierte Dicke (e) aufweist, die zwischen 0,1 mm und 0,5 mm liegt.

8. Achse (10) nach einem der vorhergehenden Ansprüche, **dadurch gekennzeichnet, dass** die Einstellscheibe (50) aus rostfreiem Stahl ist.
